# FASCICULE DE BREVET EUROPEEN

(11) **EP 4 040 027 B1**
(45) Date de publication et mention de la délivrance du brevet: **28.08.2024**
(21) Numéro de dépôt: 22155289.6
(22) Date de dépôt: 04.02.2022
(51) Int. Cl.: F16L 33/035, B65D 63/02

(54) **COLLIER DE SERRAGE AYANT UN ORGANE DE RETENUE ET UN CROCHET**
SCHLAUCHKLEMME MIT EINEM HALTEELEMENT UND EINEM HAKEN
CLAMPING COLLAR HAVING A RETAINING MEMBER AND A HOOK

(30) Priorité: 09.02.2021 FR 2101217
(43) Date de publication de la demande: 10.08.2022
(73) Titulaire: Caillau, 92130 Issy-les-Moulineaux (FR)
(72) Inventeur: RIGOLLET, Nicolas, 41200 ROMORANTIN-LANTHENAY (FR); ZINBI, Abdelfettah, 41200 ROMORANTIN-LANTHENAY (FR)
(74) Mandataire: Cabinet Beau de Loménie

(56) Documents cités:
- US-A- 4 299 012
- US-A- 4 750 242
- US-A- 5 144 726
- US-A- 5 459 906

## Description

### Domaine technique

Le présent exposé concerne un collier de serrage, en particulier un collier de serrage du type comprenant une ceinture portant un organe de retenue et un crochet configuré pour s'accrocher sur l'organe de retenue pour définir un état accroché de serrage du collier.

### Technique antérieure

Des colliers de serrage de ce type sont bien connus, par exemple par les demandes de brevet EP 2 480 355, EP 0 627 591 ou encore US 5 353 478.

Ils servent en particulier à serrer un objet, par exemple pour raccorder cet objet à un autre objet. Par exemple, l'autre objet peut-être un tube réalisé dans un matériau tel que du métal, et l'objet qui lui est raccordé est une conduite, qui est emmanchée sur le tube.

Selon un autre exemple, l'objet serré est formé par les extrémités de deux tubes raccordés axialement. Par exemple, les tubes peuvent être en métal et présenter, à leurs extrémités, des surfaces d'appui en saillie radiale sur les périphéries externes des tubes, ces surfaces d'appui formant ensemble un renflement lorsque les tubes sont aboutés. La ceinture du collier peut présenter un renfoncement qui accueille ce renflement. Pour le serrage, les tubes sont aboutés et le collier est placé autour de leurs surfaces d'appui afin que celles-ci puissent être reçues dans le renfoncement. Les surfaces d'appui et le renfoncement peuvent être conformés de manière à rapprocher les surfaces d'appui l'une de l'autre lorsque la ceinture est serrée. A cet effet, le renfoncement du collier peut avoir une section en V ou en U avec des jambes (formant des flancs de la ceinture) rabattues vers l'axe de la ceinture et légèrement inclinées par rapport à un plan perpendiculaire à cet axe, en allant en s'éloignant l'une de l'autre vers leurs extrémités libres proches de l'axe, et les surfaces d'appui des tubes peuvent être inclinées de la même manière, de sorte que la réduction du diamètre de la ceinture due au serrage du collier rapproche les surfaces d'appui l'une de l'autre.

Ces colliers donnent globalement satisfaction dans de nombreuses applications. Cependant, pour certaines applications exigeantes, en particulier lorsque l'objet serré est dur, la fermeture du collier peut occasionner momentanément un serrage excessif, susceptible de nuire aux performances du collier. Cela peut par exemple être le cas lorsque le collier sert à serrer sur un embout une conduite réalisée en matériau dur tel que du plastique rigide ou du métal, ou bien lorsque le tube sert à raccorder axialement deux tubes métalliques, notamment en les serrant par leurs surfaces d'appui métalliques.

Si le serrage du collier sur l'objet serré est momentanément trop intense, il peut arriver que certaines parties du collier, en particulier le crochet, subissent des déformations plastiques, c'est-à-dire non réversibles, ou bien que l'objet serré subisse des déformations plastiques ou des endommagements tels que des microfissures.

Ces phénomènes, parfois indétectables au moment du serrage, peuvent nuire aux performances du serrage dans le temps. Par exemple, lorsque le collier de serrage sert au raccordement d'une conduite de fluide sur un embout ou au raccordement de deux tubes pour du fluide, il peut arriver que l'étanchéité de l'assemblage ne soit plus assurée.

Le document FR2705410 tente de proposer une solution à ce problème en prévoyant que l'organe de retenue soit muni d'une butée susceptible de venir en butée avec la face interne du crochet lors de l'accrochage du crochet derrière l'organe de retenue. Ainsi, lors du serrage du collier, le crochet est déplacé de sorte que la paroi avant du crochet soit avancée sur l'organe de retenue jusqu'à dépasser une surface de retenue de l'organe de retenue afin de pouvoir s'accrocher sur cette surface, à l'arrière de l'organe de retenue. Lorsque le crochet est suffisamment avancé pour permettre cet accrochage, les butées viennent en coopération, afin d'empêcher que le crochet n'avance davantage. Cette solution peut être efficace, mais il peut être difficile d'assurer un contact de butée de bonnes qualité et fiabilité entre la butée et la face interne du crochet. Si les efforts de serrage en jeu sont élevés, ce contact peut être instable et la face interne du crochet peut alors faire office de rampe de glissement pour la butée sans la retenir réellement. De plus, le contact de butée peut avoir tendance à s'opposer au léger basculement radial du crochet vers l'intérieur qui, une fois que la paroi avant du crochet a dépassé le premier organe de butée, est nécessaire à la retenue du crochet accroché derrière l'organe de retenue. Ainsi, cette solution peut nuire à l'accrochage du crochet sur l'organe de retenue.

US5549906 divulgue un coller de serrage dont l'organe de retenue est muni d'une butée susceptible de venir en butée avec la face interne du crochet lors de l'accrochage du crochet derrière l'organe de retenue.

US5144726 et US 4750242 divulguent des colliers de serrage dont l'organe de retenue présente une extension qui ponte le crochet de l'intérieur, et dont l'extrémité libre a la forme d'une fourche qui coopère avec un bossage en projection radiale sur l'intérieur pour former une surface continue.

US4299012 divulgue un collier de serrage dont l'extrémité interne de la bande présente une languette qui pénètre dans la soyage formé dans l'autre portion de bande pour former une surface continue.

### Exposé de l'invention

Le présent exposé vise à remédier au moins en partie aux inconvénients précités en faisant en sorte d'éviter, ou du moins de limiter, les risques de sur-serrage, en particulier lors de l'accrochage du crochet sur l'organe de retenue en s'exonérant sensiblement des inconvénients de la solution précitée.

Ainsi, l'exposé concerne un collier de serrage comprenant une ceinture portant un organe de retenue et un crochet configuré pour s'accrocher sur l'organe de retenue pour définir un état accroché de serrage du collier, la ceinture comprenant au moins un flanc qui s'étend radialement vers l'intérieur, le crochet présentant une paroi avant et une partie courante qui relie la paroi avant à la ceinture. L'organe de retenue porte un premier organe de butée apte, lors de l'accrochage du crochet sur l'organe de retenue, à venir en butée avec un deuxième organe de butée pour définir une position avancée maximale du crochet par rapport à l'organe de retenue. La ceinture présente au moins un élément de paroi de butée qui est formé dans le flanc et qui présente le deuxième organe de butée, et ce deuxième organe de butée est situé, vers l'avant dans le sens du déplacement du crochet vers l'organe de retenue, tout au plus dans la zone de raccordement de la ceinture au crochet.

Ainsi, on évite d'avancer excessivement le crochet lors de son accrochage, ce qui permet d'éviter un serrage excessif lors de cet accrochage. On préserve donc l'intégrité du crochet en évitant qu'il ne soit déformé plastiquement du fait d'un effort momentanément excessif lors de l'accrochage servant à serrer le collier. Dans le même temps, le collier étant conçu pour être serré sur un objet ayant un certain diamètre, on évite de trop serrer cet objet, par le fait que la venue en butée des premier et deuxième organes de butée correspond au diamètre de spécification du collier, qui est prédéfini.

Le contact de butée entre les premier et deuxième organes de butée est réalisé à l'extérieur du crochet, en particulier à l'arrière de ce dernier, du fait de la localisation du deuxième organe de butée. Ainsi, ce contact ne concerne pas le crochet et ne risque pas de contrarier son basculement nécessaire à son accrochage sur l'organe de retenue. Il ne risque pas non plus d'être dégradé ou perdu du fait des efforts exercés sur le crochet, de sorte que les risques de glissement sont éliminés ou au moins considérablement diminués. Optionnellement, les premier et deuxième organes de butée présentent chacun une première et une deuxième surface de contact de butée situées de part et d'autre d'un plan diamétral de la ceinture, perpendiculaire à l'axe de cette dernière.

Optionnellement, la ceinture présente un renfoncement délimité par deux flancs qui s'étendent radialement vers l'intérieur, l'élément de paroi de butée comprenant deux portions d'éléments de paroi de butée, respectivement formées dans chacun de ces deux flancs.

Optionnellement, ledit au moins un flanc est interrompu à l'extrémité de la ceinture qui porte le crochet de manière à présenter une portion de bord, et le deuxième organe de butée est formé sur la portion de bord.

Optionnellement, le flanc est interrompu par un pliage ou une découpe. Optionnellement, l'organe de retenue présente un prolongement qui, à l'état accroché, s'étend sous la partie courante du crochet et qui présente le premier organe de butée.

Optionnellement, le prolongement présente un relief de rigidification. Optionnellement, l'organe de retenue comprend une saillie radiale externe.

On comprend que les premier et deuxième organes de butée peuvent ainsi être réalisés de manière extrêmement simple tout en remplissant leur fonction de définir la position avancée maximale du crochet par rapport à l'organe de retenue au moment de l'accrochage du crochet sur l'organe de retenue et, plus précisément, au moment où la paroi avant du crochet passe à l'arrière de l'organe de retenue pour s'accrocher sur ce dernier, sans risque de glissement entre les organes de butée et sans nuire au basculement du crochet nécessaire l'accrochage. Le collier est en particulier réalisé en métal, éventuellement en une seule pièce, et les premier et deuxième organes de butée peuvent être réalisés par de simples pliages, découpes et/ou emboutis dans le matériau métallique du collier.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 montre, en élévation latérale, un collier de serrage selon le présent exposé, prêt à être fermé et serré sur un objet.
[Fig. 2] La figure 2 montre le collier au moment de son serrage sur l'objet.
[Fig. 2A] La figure 2A est une vue du détail II de la figure 2, également en élévation latérale.
[Fig. 2B] La figure 2B est une vue du détail II, vu en perspective prise de dessous, selon la flèche IIB de la figure 2.
[Fig. 2C] La figure 2C est une vue en plan du détail II vu de dessous, selon la flèche IIB de la figure 2.
[Fig. 3] La figure 3 est une vue du collier de la figure 2, en perspective prise de dessus..
[Fig. 4] La figure 4 est une vue analogue à la figure 2, montrant une variante.
[Fig. 4A] La figure 4A est une vue du détail IV de la figure 4, en élévation latérale.
[Fig. 4B] La figure 4B est une vue du détail IV, en perspective prise de dessous, selon la flèche IVB de la figure 4.
[Fig. 4C] La figure 4C est une vue en plan du détail IV vu de dessous, selon la flèche IVB de la figure 4.
[Fig. 5] La figure 5 est une vue du collier de la figure 4, en perspective prise de dessus.

### Description détaillée

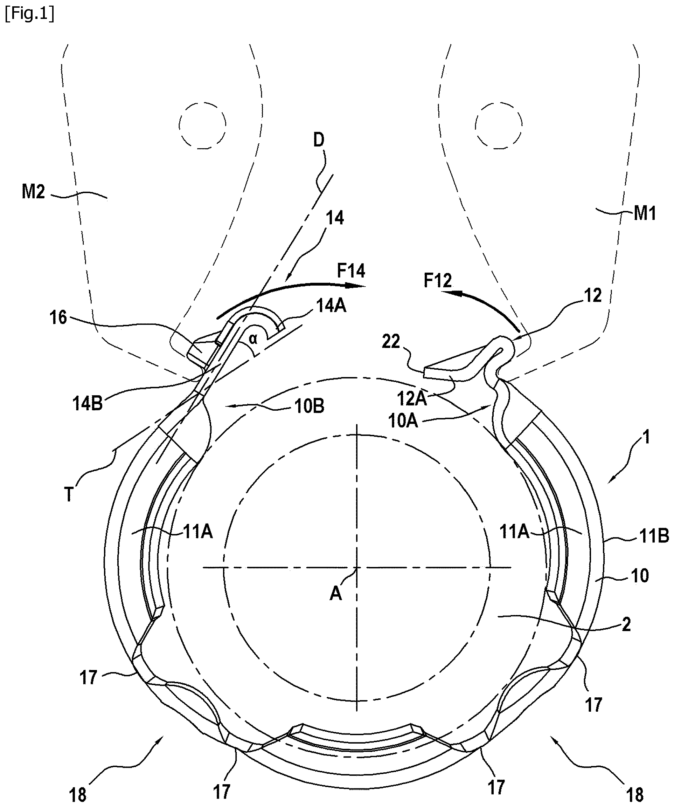

On décrit tout d'abord les figures 1, 2, 2A-2C et 3.

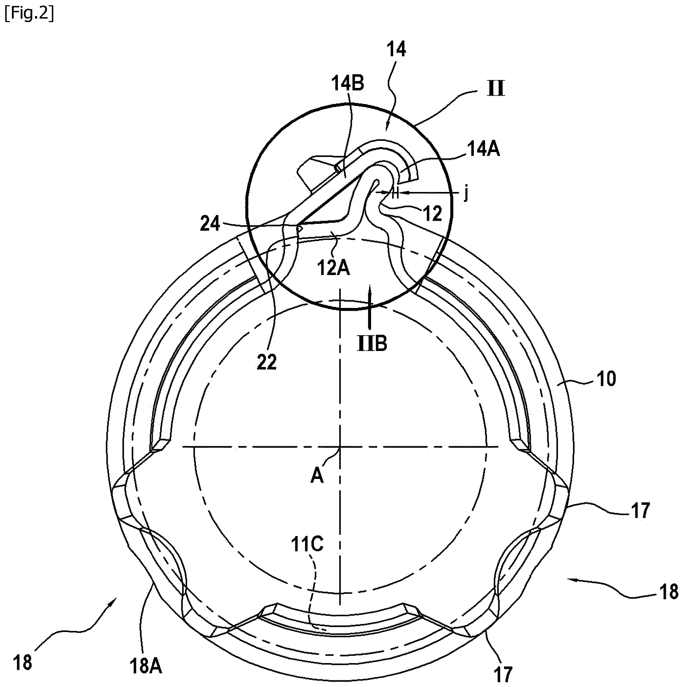

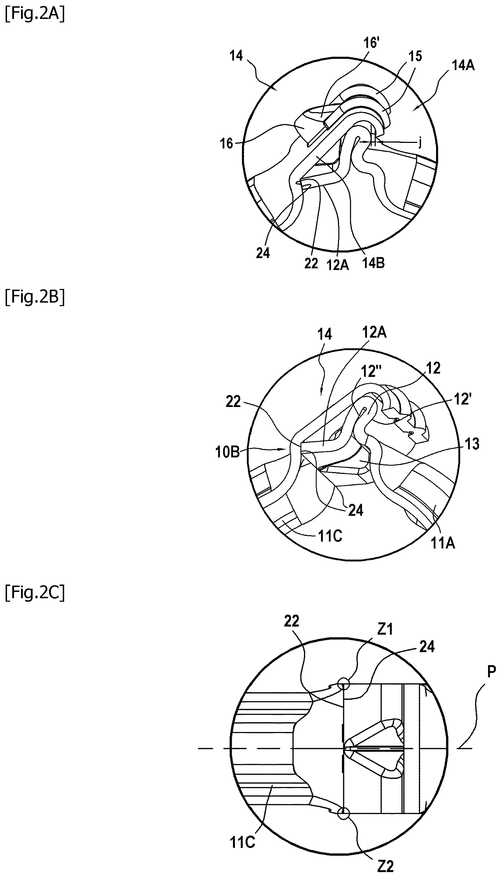

La figure 1 montre un collier de serrage 1 comprenant une ceinture 10 ayant deux extrémités, respectivement 10A et 10B. L'extrémité 10A porte un organe de retenue 12, tandis que l'extrémité 10B porte un crochet 14 qui est configuré pour s'accrocher sur l'organe de retenue 12 pour définir un état accroché de serrage du collier montré sur la figure 2. En l'espèce, l'organe de retenue 12 est en saillie radiale externe par rapport à la périphérie externe de la ceinture 10. Il s'agit en l'espèce d'un double pli formé vers l'extérieur.

Généralement, à l'état serré du collier, la ceinture 10 définit un cercle d'axe A, cet axe étant défini comme étant l'axe du collier de serrage ou l'axe de sa ceinture.

Au sens du présent exposé, on définit le sens allant vers l'extérieur ou vers le dessus comme étant le sens allant en s'éloignant de cet axe A. A l'inverse, le sens vers l'intérieur ou vers le dessous est celui qui va en se rapprochant de cet axe A. Par ailleurs, on comprend que, pour venir s'accrocher sur l'organe de retenue, le crochet 14 est déplacé dans le sens de la flèche F14. Ainsi, en s'intéressant au crochet, on considérera que le sens allant vers l'avant est celui défini par cette flèche F14. De manière générale, en s'intéressant au crochet 14 ou à l'extrémité 10B de la ceinture, le sens vers l'avant est celui qui va vers l'organe de retenue 12 et l'extrémité 10A sans passer par la ceinture. De même, lors de l'accrochage, l'organe de retenue 12 est déplacé vers le crochet dans le sens F12. Ainsi, en s'intéressant à l'organe de retenue 12 et à l'extrémité 10A de la ceinture, on définit le sens vers l'avant comme étant celui qui va vers l'extrémité 10B du crochet 14 sans passer par la ceinture 10.

Le crochet 14 présente une paroi avant 14A et une partie courante 14B qui relie la paroi avant 14A à la ceinture 10. A l'état serré du collier, la paroi avant 14A est retenue derrière l'organe de retenue 12, tandis qu'une partie avant de l'organe de retenue 12 se trouve sous la partie courante 14B du crochet 14.

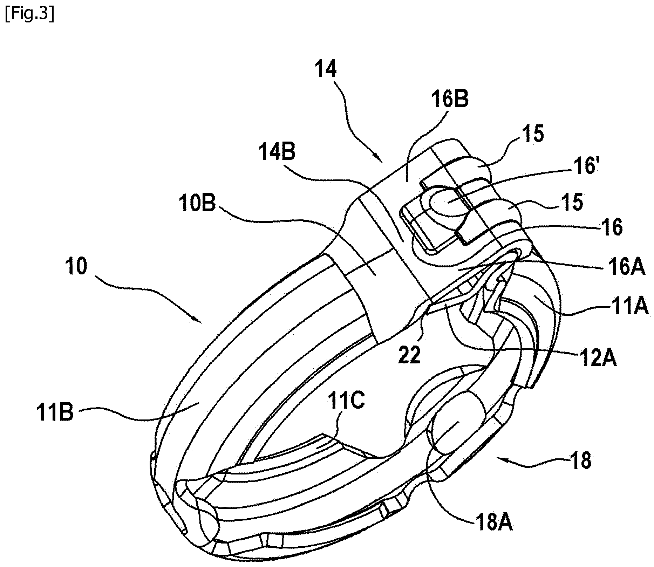

En l'espèce, le crochet 14 est du type décrit dans la demande de brevet français n° FR 19 10485 au nom de la demanderesse, à laquelle on peut se référer. En particulier, la partie courante 14B du crochet présente une surface de prise 16 en saillie radiale vers l'extérieur et deux bordures latérales 16A, 16B (voir figure 3) qui s'étendent axialement de part et d'autre de la surface de prise en étant radialement en retrait par rapport à celles-ci. Ici, axialement, s'entend comme étant selon la direction définie par l'axe A. Cette surface de prise 16 est formée à l'arrière d'un bossage 16' de la partie courante 14B du crochet. La paroi avant 14A du crochet présente au moins une, en l'espèce deux, nervures de rigidification 15.

Ainsi, dans l'exemple représenté, la partie courante 14B du crochet définit une direction générale D sensiblement rectiligne, inclinée d'un angle α par rapport à la direction tangentielle T de la ceinture au niveau du raccordement du crochet à l'extrémité 10B de la ceinture (voir figure 1). Cet angle α est par exemple de l'ordre de 10 à 40 degrés, en particulier de l'ordre de 20 à 30 degrés. On remarque que la partie courante du crochet est reliée à l'extrémité 10B de la ceinture sans repli, en particulier sans ressaut.

Cependant, le présent exposé peut concerner d'autres types de crochets, en particulier un crochet dont la partie courante est définie par une ondulation radiale vers l'extérieur et/ou dont la zone de raccordement à l'extrémité 10B de la ceinture est définie par un pli radial vers l'extérieur, par exemple comme dans le brevet US 5 353 478.

Sur la figure 1, on voit le collier 1 au cours de son serrage sur un objet 2 représenté en trait interrompu. Par exemple, cet objet 2 est l'assemblage de deux extrémités de tubes raccordés axialement. Le collier 1 est serré à l'aide d'un outil de serrage, en particulier une pince, dont on voit deux mâchoires respectivement M1, qui vient en prise derrière l'organe de retenue 12 et M2, qui vient en prise sur le crochet 14, en l'espèce derrière sa surface de prise 16. Selon l'exposé, l'organe de retenue 12 porte un premier organe de butée 22 qui, comme on le voit sur les figures 2, 2A et 2B vient en butée sur un deuxième organe de butée 24 lors de l'accrochage du crochet 14 sur l'organe de retenue 12 pour définir une position avancée maximale du crochet par rapport à l'organe de retenue 12.

A ce sujet, on signale que la figure 2 montre le collier juste au moment de l'accrochage, lorsque la paroi avant du crochet 14 passe derrière l'organe de retenue 12. Alors que les organes de butée 22 et 24 sont en butée, un très léger espace signalé par un jeu j peut exister à l'arrière de l'organe de retenue 12, entre la paroi arrière de cet organe de retenue 12 et la face interne de la paroi avant 14A du crochet. On comprend que la venue en butée des organes de butée 22 et 24 définit la position avancée maximale du crochet 14 par rapport à l'organe de retenue 12.

On voit sur les figures que, en l'espèce, le premier organe de butée est formé sur un prolongement 12A de l'organe de retenue 12 qui s'étend vers l'avant par rapport à cet organe de retenue 12 et qui, à l'état accroché, s'étend sous la partie courante 14B du crochet. On voit notamment sur la figure 2B que ce prolongement 12A peut être relié à la partie radialement saillante de l'organe de retenue 12 par un ou plusieurs éléments de rigidification, tels qu'un écrouissage 13 formant un renfoncement sur l'intérieur et un bossage sur l'extérieur. De manière générale, cet écrouissage forme un relief de rigidification en saillie soit sur la face interne, soit sur la face externe du prolongement 12A.

L'organe de retenue 12 est formé en l'espèce par un double pli radial avec une portion de pli arrière 12' reliée à l'extrémité 10A de la ceinture une portion de pli avant 12" qui porte le prolongement 12A (voir figure 2B). Le relief de rigidification 13 est formé à la jonction entre la portion de pli avant 12" et le prolongement 12A. Le prolongement est décalé radialement vers l'intérieur par rapport au sommet de l'organe de retenue 12, en s'étendant par exemple sensiblement dans le prolongement de la direction périphérique de la ceinture 10. Ainsi, le prolongement 12A peut s'étendre sensiblement selon la direction circonférentielle de la ceinture, au-delà de l'organe de retenue 12 en allant vers l'avant de cet organe de retenue. Ainsi, comme on le comprend notamment sur la figure 2A, à l'état serré du collier, la face interne du prolongement 12A s'étend sensiblement circonférentiellement dans le prolongement de la face interne de la ceinture. Il est également possible que le prolongement soit sensiblement plan et s'étende sensiblement tangentiellement à la direction circonférentielle de la ceinture, par rapport à la zone de jonction de l'organe de retenue 12 à l'extrémité 10A de la ceinture.

Le deuxième organe de butée 24 est quant à lui situé dans la ceinture 10, en particulier, dans la zone de raccordement de l'extrémité 10B de la ceinture au crochet 14. Ainsi, comme on le voit sur la figure 2A, ce deuxième organe de butée 24 est situé à l'extrémité 10B de la ceinture, dans sa zone de transition avec la partie courante 14B du crochet.

En l'espèce, le collier représenté est du type dont la ceinture présente un renfoncement. En effet, cette ceinture 10 présente au moins un flanc 11A qui s'étend vers l'intérieur. En l'espèce, la ceinture présente deux flancs, respectivement 11A et 11C qui s'étendent de part et d'autre d'une région centrale cylindrique 11B (voir figure 3). Ainsi, la ceinture présente généralement une section radiale en forme de U ou de V, avec une partie de sommet 11B, qui forme la base du U ou la pointe du V et dont la périphérie interne définit le diamètre interne maximal de la ceinture, et avec deux ailes définissant respectivement deux flancs 11A et 11C. Cette partie de sommet 11B forme une région centrale, entre les deux flancs 11A et 11C. En effet, l'objet 2 serré par le collier peut présenter un renflement radial par exemple formé par les surfaces d'appui de deux tubes raccordés axialement, reçues dans le renfoncement interne de la ceinture délimitée entre les flancs 11A et 11C. Ainsi, lorsqu'on indique que le prolongement 12A de l'organe de retenue 12 s'étend dans le prolongement de la périphérie de la ceinture, on considère en fait qu'il s'étend dans le prolongement de la partie de sommet 11B de la section de la ceinture. A la première extrémité 10A de la ceinture, les flancs 11A et 11C sont redressés radialement pour venir sensiblement dans la surface cylindrique définie par la région centrale 11B et former l'organe de retenue 12 par pliage. De même, à la deuxième extrémité 10B de la ceinture, les flancs 11A et 11C sont redressés et l'on voit que la partie courante 14B du crochet est dépourvue de flancs, la continuité du matériau de ceux-ci étant alors située dans la direction générale circonférentielle définie par cette partie courante 14B. Ainsi, à l'extrémité 10B de la ceinture, les flancs 11A et 11C sont interrompus et présentent des portions de bord orientées vers l'avant du crochet 14.

Le deuxième organe de butée 24 est formé dans ces portions de bord des flancs 11A et 11C. Ces flancs forment des éléments de paroi de butée qui, à l'extrémité 10B de la ceinture, forment le deuxième organe de butée 24. Plus précisément, le deuxième organe de butée 24 est réalisé dans les portions de bord de ces flancs qui forment une zone de transition entre ces flancs et le crochet. Ainsi, en l'espèce, le deuxième organe de butée 24 est formé des portions de bord des deux flancs 11A et 11C qui s'étendent, dans la zone de raccordement du crochet à l'extrémité 10B de la ceinture, de part et d'autre d'une partie axialement médiane de cette zone de raccordement.

On comprend que le deuxième organe de butée comprend deux parties, respectivement situées dans les portions de bord de chacun des deux flancs 11A et 11C. Plus précisément, comme on le voit sur les figures 2B et 2C, les premier et deuxième organes de butée 22 et 24 présentent chacun une première et une deuxième surface de contact de butée Z1, Z2, qui sont situées de part et d'autre du plan médian diamétral P de la ceinture, perpendiculaire à son axe 1. Le collier est d'ailleurs symétrique par rapport à ce plan P.

Ainsi, le contact de butée est réparti de part et d'autre du plan P. Il s'oppose à des basculements par rapport à ce plan et s'opère donc correctement, même si l'outil de serrage est imparfaitement positionné par rapport au crochet et à l'organe de retenue.

Etant formé dans les flancs, qui sont des zones dans lesquelles la matière est fortement écrouie, le deuxième organe de butée est particulièrement résistant aux efforts de serrage.

Ceci est d'autant plus vrai lorsque le deuxième organe de butée est formé dans les portions de bords des flancs qui sont pliées pour ramener la matière des flancs dans le plan de la région centrale 11B, ces portions étant alors particulièrement fortement écrouies. Ce plus, ces portions de bords sont parfaitement délimitées et permettent donc un contact de butée de précision. En l'espèce, le collier présente des réserves de capacité formées par des zones 18 de la ceinture située entre des régions 17 dans lesquelles les flancs 11A et 11C sont localement interrompus. Les zones 18 formant réserve de capacité peuvent présenter une déformabilité accrue, par exemple en présentant des perçages 18A ou analogues. De ce point de vue, le collier peut être réalisé comme décrit dans la demande de brevet français n° 19 10486, à laquelle on peut se référer.

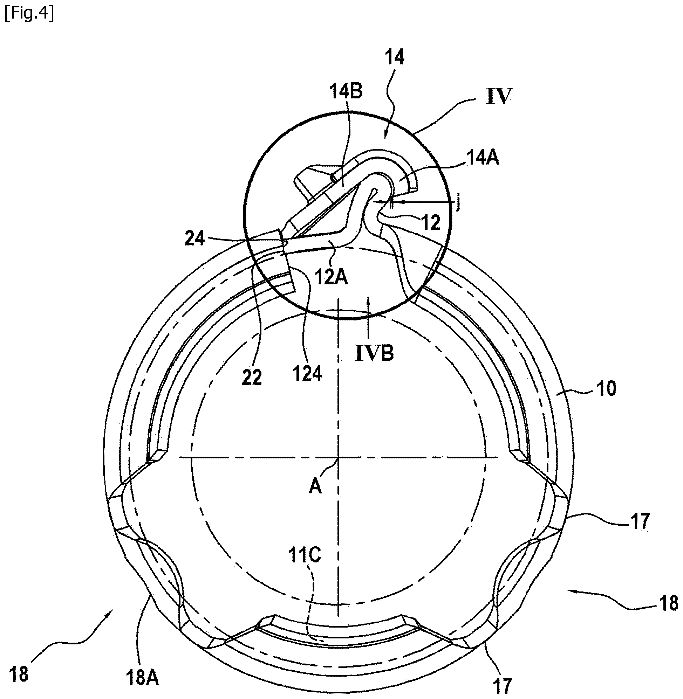

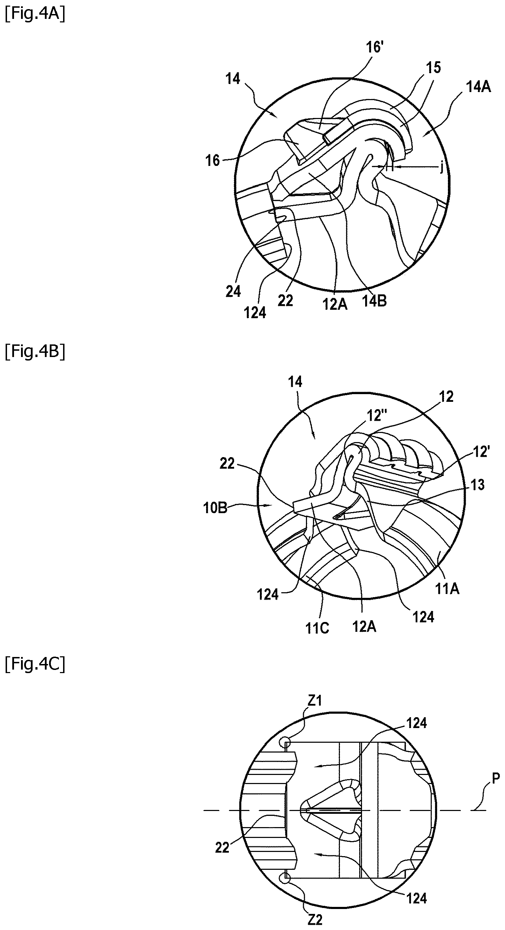

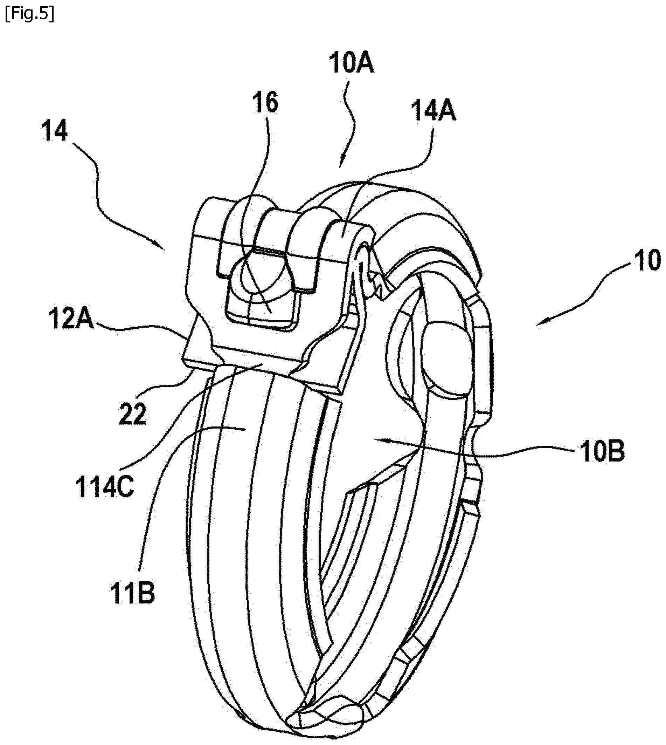

On décrit maintenant les figures 4, 4A-4C et 5 qui montrent une variante qui se distingue du collier qui vient d'être décrit seulement par la conformation du deuxième organe de butée. Ainsi, les mêmes références numériques que sur les figures 1, 2, 2A-2C et 3 sont utilisées sur ces figures à l'exception de celles qui désignent le deuxième organe de butée.

Sur les figures 1, 2, 2A-2C et 3, les flancs sont interrompus à l'extrémité 10B de la ceinture par des pliages qui les redressent dans le plan de la région centrale 11B.

Dans la variante des figures 4, 4A-4C et 5, les flancs 11A et 11C sont interrompus par des découpes. Ainsi, les portions de bord dans lesquelles est formé le deuxième organe de butée 124, sont les bords de découpe des flancs, qui sont orientés sensiblement radialement. Comme on le voit sur les figures 4B et 4C, le collier est symétrique par rapport au plan médian diamétral P, qui est perpendiculaire à l'axe A de la ceinture, et les contacts de butée entre les premier et deuxième organes de butée 22 et 124 sont réalisés de part et d'autre du plan P.

Les découpes des flancs 11A et 11C à l'extrémité 10B de la ceinture ont pour conséquence que la ceinture est rattachée au crochet seulement par la région centrale 11B. Cependant, à partir de son extrémité arrière 114C ainsi rattachée à la ceinture, le crochet peut avoir une largeur (mesurée axialement) qui s'agrandit de sorte que, dans sa partie avant 14A, le crochet bénéficie de la pleine largeur de la bande dans laquelle est formé le collier. C'est ce que montre notamment la figure 5. On voit d'ailleurs que, à l'extrémité 10A de la ceinture, les flancs sont ramenés dans un même plan pour former l'organe de retenue, comme dans le mode de réalisation précédent. On pourrait bien entendu cependant également interrompre les flancs par découpe dans cette région.

Le deuxième organe de butée est particulièrement résistant aux efforts de serrage car il est formé sur les bords des découpes, qui sont généralement orientés radialement et offrent donc des surfaces d'appui nettes et difficiles à déformer. De plus, le positionnement du deuxième organe de butée est particulièrement précis.

## Revendications

1. Collier de serrage (1) comprenant une ceinture (10) portant un organe de retenue (12) et un crochet (14) configuré pour s'accrocher sur l'organe de retenue (12) pour définir un état accroché de serrage du collier, la ceinture (10) comprenant au moins un flanc (11A, 11C) qui s'étend radialement vers l'intérieur, le crochet (14) présentant une paroi avant (14A) et une partie courante (14B) qui relie la paroi avant à la ceinture (10), l'organe de retenue (12) portant un premier organe de butée (22) apte, lors de l'accrochage du crochet sur l'organe de retenue, à venir en butée avec un deuxième organe de butée (24,34,44) pour définir une position avancée maximale du crochet (14) par rapport à l'organe de retenue (12), **caractérisé en ce que** la ceinture (10) présente au moins un élément de paroi de butée (11A, 11C) qui est formé dans le flanc (11A, 11C) et qui présente le deuxième organe de butée (24), et **en ce que** le deuxième organe de butée est situé, vers l'avant dans le sens (F14) du déplacement du crochet vers l'organe de retenue, tout au plus dans la zone de raccordement de la ceinture (10) au crochet (14).

2. Collier de serrage selon la revendication 1, dans lequel les premier et deuxième organes de butée (22, 24) présentent chacun une première et une deuxième surface de contact de butée (Z1, Z2) situées de part et d'autre d'un plan (P) diamétral de la ceinture, perpendiculaire à l'axe de cette dernière.

3. Collier de serrage selon l'une quelconque des revendications 1 et 2, dans lequel la ceinture (10) présente un renfoncement délimité par deux flancs (11A, 11C) qui s'étendent radialement vers l'intérieur, l'élément de paroi de butée comprenant deux portions d'éléments de paroi de butée, respectivement formées dans chacun de ces deux flancs.

4. Collier de serrage selon l'une quelconque des revendications 1 à 3, dans lequel ledit au moins un flanc (11A, 11C) est interrompu à l'extrémité (10B) de la ceinture (10) qui porte le crochet (14) de manière à présenter une portion de bord, et dans lequel le deuxième organe de butée (24) est formé sur la portion de bord.

5. Collier de serrage selon la revendication 4, dans lequel le flanc (11A, 11C) est interrompu par un pliage ou une découpe.

6. Collier de serrage selon l'une quelconque des revendications 1 à 5, dans lequel l'organe de retenue (12) présente un prolongement (12A) qui, à l'état accroché, s'étend sous la partie courante (14B) du crochet (14) et qui présente le premier organe de butée (22).

7. Collier de serrage selon la revendication 6, dans lequel le prolongement (12A) présente un relief de rigidification (13).

8. Collier de serrage selon l'une quelconque des revendications 1 à 7, dans lequel l'organe de retenue (12) comprend une saillie radiale externe.

## Patentansprüche

1. Schlauchklemme (1), umfassend einen Riemen (10), der ein Halteelement (12) und einen Haken (14) trägt, der dazu ausgestaltet ist, sich auf dem Halteelement (12) einzuhaken, um einen Hakenspannzustand der Klemme zu definieren, wobei der Riemen (10) mindestens eine Flanke (11A, 11C) umfasst, die sich radial nach innen erstreckt, wobei der Haken (14) eine Vorderwand (14A) und einen Laufteil (14B) aufweist, der die Vorderwand mit dem Riemen (10) verbindet, wobei das Halteelement (12) ein erstes Anschlagselement (22) trägt, das ausgelegt ist, um beim Einhaken des Hakens auf dem Halteelement in Anschlag mit einem zweiten Anschlagselement (24, 34, 44) zu kommen, um eine maximal vorgeschobene Position des Hakens (14) in Bezug auf das Halteelement (12) zu definieren, **dadurch gekennzeichnet, dass** der Riemen (10) mindestens ein Anschlagwandelement (11A, 11C) aufweist, das in der Flanke (11A, 11C) gebildet ist und welches das zweite Anschlagselement (24) aufweist, und dass sich das zweite Anschlagselement nach vorne in der Bewegungsrichtung (F14) des Hakens zu dem Halteelement hin höchstens in dem Verbindungsbereich des Riemens (10) mit dem Haken (14) befindet.

2. Schlauchklemme nach Anspruch 1, wobei das erste und das zweite Anschlagselement (22, 24) jeweils eine erste und eine zweite Anschlagkontaktfläche (Z1, Z2) aufweisen, die sich auf beiden Seiten einer Ebene (P) befinden, die diametral zu dem Riemen, senkrecht zu der Achse davon, verläuft.

3. Schlauchklemme nach einem der Ansprüche 1 und 2, wobei der Riemen (10) eine Vertiefung aufweist, die durch zwei Flanken (11A, 11C) begrenzt ist, die sich radial nach innen erstrecken, wobei das Anschlagwandelement zwei Anschlagwandelementabschnitte umfasst, die jeweils in jeder dieser zwei Flanken gebildet sind.

4. Schlauchklemme nach einem der Ansprüche 1 bis 3, wobei die mindestens eine Flanke (11A, 11C) an dem Ende (10B) des Riemens (10), der den Haken (14) trägt, unterbrochen ist, sodass sie einen Randabschnitt aufweist, und wobei das zweite Anschlagselement (24) auf dem Randabschnitt gebildet ist.

5. Schlauchklemme nach Anspruch 4, wobei die Flanke (11A, 11C) durch eine Falte oder einen Schnitt unterbrochen ist.

6. Schlauchklemme nach einem der Ansprüche 1 bis 5, wobei das Halteelement (12) eine Verlängerung (12A) aufweist, die sich in dem eingehakten Zustand unter dem Laufteil (14B) des Hakens (14) erstreckt und die das erste Anschlagselement (22) aufweist.

7. Schlauchklemme nach Anspruch 6, wobei die Verlängerung (12A) ein Versteifungsrelief (13) aufweist.

8. Schlauchklemme nach einem der Ansprüche 1 bis 7, wobei das Halteelement (12) einen externen radialen Vorsprung umfasst.

## Claims

1. A clamping collar (1) comprising a belt (10) carrying a retaining member (12) and a hook (14) configured to hook onto the retaining member (12) to define a hooked clamping state of the collar, the belt (10) comprising at least one flank (11A, 11C) which extends radially inwardly, the hook (14) having a front wall (14A) and a running part (14B) which connects the front wall to the belt (10), the retaining member (12) carrying a first abutment member (22) able, during the hooking of the hook onto the retaining member, to come into abutment with a second abutment member (24, 34, 44) to define a maximum advanced position of the hook (14) relative to the retaining member ( 12), **characterized in that** the belt (10) has at least one abutment wall element (11A, 11C) which is formed in the flank and which has the second abutment member (24), and **in that** the second abutment member is located, forwardly in the direction (F14) of movement of the hook towards the retaining member, at most in the area of connection of the belt (10) to the hook (14).

2. The clamping collar according to claim 1, wherein the first and second abutment members (22, 24) each have a first and a second abutment contact surface (Z1, Z2) located on either side of a diametral plane (P) of the belt, perpendicular to the axis of the latter.

3. The clamping collar according to any of claims 1 and 2, wherein the belt (10) has a recess delimited by two flanks (11A, 11C) which extend radially inwardly, the abutment wall element comprising two portions of abutment wall elements, respectively formed in each of these two flanks.

4. The clamping collar according to any of claims 1 to 3, wherein said at least one flank (11A, 11C) is interrupted at the end (10B) of the belt (10) which carries the hook (14) so as to present an edge portion, and wherein the second abutment member (24) is formed on the edge portion.

5. The clamping collar according to claim 4, wherein the flank (11A, 11C) is interrupted by a fold or a cutout.

6. The clamping collar according to any of claims 1 to 5, wherein the retaining member (12) has an extension (12A) which, in the hooked state, extends under the running part (14B) of the hook (14) and which has the first abutment member (22).

7. The clamping collar according to claim 6, wherein the extension (12A) has a stiffening relief (13).

8. The clamping collar according to any of claims 1 to 7, wherein the retaining member (12) comprises an outer radial protrusion.
